# EUROPEAN PATENT SPECIFICATION

(11) **EP 3 707 452 B1**
(45) Date of publication and mention of the grant of the patent: **08.10.2025**
(21) Application number: 18812266.7
(22) Date of filing: 06.11.2018
(51) Int. Cl.: F27B 9/30, C04B 38/06, F27D 17/00

(54) **ASSEMBLY FOR TREATING PRIMTED ITEMS**
VORRICHTUNG ZUR BEHANDLUNG VON DRUCKERZEUGNISSEN
ENSEMBLE POUR TRAITEMENT D'ARTICLES IMPRIMÉS

(30) Priority: 08.11.2017 IT 201700127476
(43) Date of publication of application: 16.09.2020
(73) Proprietor: Siti - B&T Group S.p.A., 41043 Formigine (Modena) (IT)
(72) Inventor: CARATTI, Maurizio, 41043 Formigine (Modena) (IT); CASONI, Ruggero, 41043 Formigine (Modena) (IT); BIANCHINI, Alessandro, 41043 Formigine (Modena) (IT)
(74) Representative: Zoli, Filippo
(86) International application number: PCT/IB2018/058717
(87) International publication number: WO 2019/092596

(56) References cited:
- DE-B1- 3 014 905

## Description

### TECHNICAL FIELD OF THE INVENTION

The present invention relates to a new assembly for treating printed items as well as a digital printing system for items, such as tiles or slabs.

### TECHNICAL BACKGROUND

In digital printing or screen printing systems, glazes or inks with solvents usually including aldehydes or other compounds are used.

These solvents are a source of considerable pollution, it was often tried to be eliminated, proposing, as the main abatement systems, the reduction of solvents in glazes and inks.

An alternative could be to abate the solvents downstream of the chimney fumes of the oven by means of post combustor burners.

However, this solution would be very expensive both from the installation point of view and the high energy consumption required for the heating of all the fumes emitted by the oven chimney, considering also, in the case in which an atomizer was not provided, the energy used for the same would be completely lost.

It has also been attempted to realize solvent based products, but in particular with reference to digital printing, it has not been possible to obtain satisfactory results using these solvents.

DE 3014905 discloses an assembly for treating items comprising a drying unit and an oven located downstream the drying unit, where the fumes of the drying unit are partially recirculated into the drying unit itself and into the oven. in D1, the fumes sucked from the initial portion of the oven are mixed with the fumes sucked from the drying unit before being reintroduced into the drying unit itself.

### OBJECTS OF THE INVENTION

An object of the present invention is to provide a new assembly for treating items by digital printing or screen printings.

Another object of the present invention is to provide an assembly as above that allows to abate the solvents, such as aldehydes, of the inks or glazes in a simple and effective manner.

Another object of the present invention is to provide an assembly for treating that is capable of recovering the energy used abating the solvents, such as aldehydes.

Another object of the present invention is to provide a new digital printing or screen printing system.

According to one aspect of the invention an assembly according to claim 1 is provided.

The dependent claims refer to preferred and advantageous examples of embodiments of the invention.

### BRIEF DESCRIPTION OF THE DRAWINGS

Other characteristics and advantages of the invention will be more evident from the description of an example of embodiment of an assembly, illustrated by way of example in the accompanying drawings wherein:
- Figure 1 illustrates an assembly in accordance with a solution which does not form the object of the present invention;
- Figure 2 illustrates an assembly according to the present invention; and
- Figure 3 illustrates another example of embodiment of assembly according to the present invention.

In the accompanying drawings, identical parts or components are distinguished by the same reference numerals.

### EXAMPLE OF EMBODIMENTS OF THE INVENTION

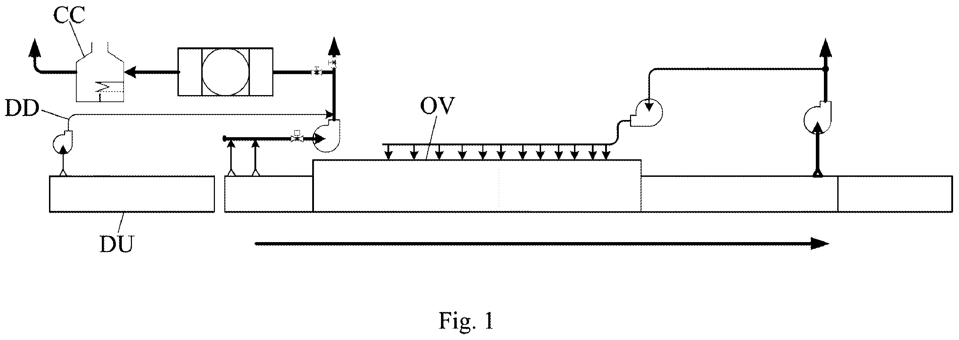

With reference to Figure 1, it illustrates a solution which does not form the object of the present invention and that comprises a drying unit DU of printed items, as well as an oven OV.

A duct DD for sampling the fumes or volatile currents from the drying unit DU is also provided, designed to convey such volatile fumes or currents to a combustor CC designed to abate or burn the aldehydes or polluting substances provided in the fumes, before the expulsion of the same in the atmosphere or outside.

This solution involves, among other things, the arrangement of a combustor dedicated to the abatement of polluting substances as well as of a circuit for serving the same.

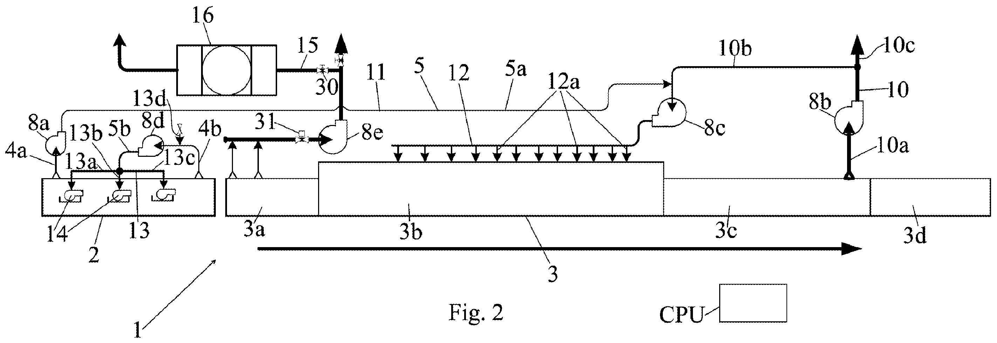

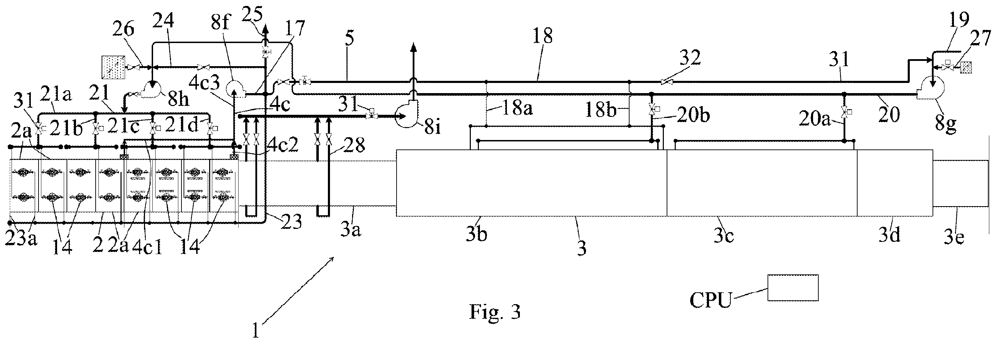

With reference now to Figures 2 and 3, an assembly 1 according to the present invention is illustrated for the treatment of items, such as tiles or slabs, for example made of ceramic material, the items thereof are printed by digital printing or screen printing of inks or glazes.

"Printing" according to the present invention means to apply by means of a printing unit, a decoration, such as an image, a writing, colour spots, a logo, etc. on one or more faces of items.

The assembly 1 comprises in particular a drying unit 2 of the printed items, as well as a cooking unit or oven 3, e.g. for ceramics, of the printed and dried items, which is placed downstream of the drying unit. 2 or is in any case adapted to receive and then treat the items treated in the latter.

The assembly comprises then a first chimney or duct 4a and a second chimney or duct 4b for sucking or transmitting volatile fumes or currents from the drying unit 2 and a ventilation or conveying circuit 5 of the volatile fumes or currents in fluid communication or connected with the chimney or duct 4a, 4b and designed to send the volatile fumes or currents sucked or derived from the drying unit 2 within the cooking unit or oven 3 and/or in recirculation within the same drying unit 2, so that the fumes taken from the chimney 4a, 4b are conveyed into the cooking unit or oven 3 and/or recirculated in the drying unit 2 thereby treating or reducing or abate or burn the aldehydes or the polluting substances contained in the fumes.

The drying unit 2 may be designed to bring the temperature of the printed items, such as tiles or slabs, to about 300°C-500°C, even at 400°C. Generally, the pre-oven dryer is suitably sized to reach the temperatures and times necessary for the complete or partial evaporation of the aldehydes and solvents of the inks or glazes.

The oven 3 can also provide several stretches or sections, e.g. one or more of the following: an initial section 3a of connection with the drying unit 2, a preheating section 3b, a cooking section 3c, a cooling section, which can be fast if required, 3d and a terminal section 3e.

More in particular, the ventilation or conveying circuit 5 may comprise one or more ducts for the transfer of fumes from the chimney 4a, 4b.

If desired, one or more ducts for deploying ambient or external air are provided within the ventilation or conveying circuit 5 or within the assembly lines, which are in fluid communication with a source of ambient air or air which is external to the assembly 1.

The assembly 1 is then provided with means for sucking and/or thrusting the currents or fluids along the ducts of the assembly, e.g. one or more fans 8a, 8b, 8c, 8d, 8e.

With specific reference to the example embodiment illustrated in Figure 2, the ventilation or conveying circuit 5 comprises a first line 5a designed to send the volatile fumes or currents sucked by the drying unit into the cooking unit or oven 3, so that the fumes taken from the chimney 4a are conveyed into the cooking unit or oven 3 and a second line 5b designed to send the volatile fumes or currents aspirated by the drying unit 2 in recirculation within the drying unit 2 itself.

The chimney 4a could flow into a first fan 8a from which the first line 5a or a transfer duct 11 thereof extends.

If desired, the first line 5a of the ventilation or conveying circuit 5 also comprises a sampling unit 10 of a volatile current from an end portion of the oven 3 or downstream of the oven 3, and in this case the volatile fumes or currents are mixed with such current before being placed in the oven 3 and then as a result of the heating in the oven the aldehydes or the polluting substances contained in the fumes are abated or burned.

In this regard, the first line 5a comprises a transfer duct 11, which extends from the chimney 4a to the sampling unit 10.

Moreover, the sampling unit 10 may comprise a first conduit 10a extending directly from an end portion, particularly at the top, of the oven or downstream of the oven 3, then a second fan 8b and then a second conduit 10b downstream of the fan 8b. If desired, the sampling unit 10 also comprises a discharge duct 10c, to discharge e.g. in the atmosphere.

In this case, the transfer duct 11 could flow into the second duct 10b and then a third fan 8c could be provided, in which the second duct 10b flows and from which departs a dispensing duct 12 to send aldehydes or polluting substances, possibly mixed with air within the oven 3.

The dispensing duct 12 and the transfer duct 11 could also be directly connected, therefore without interposing the third fan 8c, in which case the suction and/or thrust means would be different or placed in different positions of the assembly.

Moreover, a plurality of cooking burners or first burners (not shown in figures) can be provided within the oven 3 and in this case the dispensing duct 12 is designed to send comburent air or fluid into the first burners, if desired by means of respective tapping sections 12a of the dispensing duct 12.

If a second line 5b is provided, the assembly may comprise a second chimney or duct 4b for the suction of fumes or currents, while the second line 5b comprises a distribution duct or line 13, which extends from the second chimney 4b, if provided, or directly from the first chimney 4a to the drying unit 2, if desired with the interposition of suction and/or thrusting means, such as a fourth fan 8d.

If desired, a dispensing duct 13d of ambient or external air is provided within the second line 5b, which is in fluid communication with an air source external to the assembly 1.

The second distribution line 13 may comprise one or more (three in the figures) branching ducts 13a, 13b, 13c each one designed to serve a respective portion or sub-unit of the drying unit 2.

In this regard, the assembly 1 could comprise a plurality of drying burners or second burners 14 within the drying unit 2 and in this case the distribution line 13 would be designed to send comburent air or fluid within the second burners 14. If more than one branching duct 13a, 13b, 13c are provided, each of them would be designed to serve one or more second burners 14.

Clearly, alternatively or additionally, the drying unit could be structured differently, for example also or only with drying means different from the burners, such as means for conveying hot air.

Moreover, the assembly 1 may also comprise a discharge line 15 of the fumes or volatile components, if desired served by a special fan 8e and, for example, intercepted by a respective filter 16. The discharge line 15 could branch directly from the drying unit 2 or from the oven 3, for example from an initial section 3a of the same.

The drying unit 2 may have a length equal to 10-40%, for example to 20-30% of the overall length of the assembly 1.

With reference to the specific example embodiment of Figure 3, as will be seen, the ventilation or conveying circuit 5 is fed by means of a third chimney or a chimney line 4c, which may comprise one or more ducts 4c1, 4c2 leading to or in fluid communication on one side in a respective portion of the drying unit 2 and on the other side in a terminal duct 4c3 of the chimney line 4c in fluid communication, if desired, with the interposition of a sixth fan 8f or suction and/or thrusting means of the circuit 5.

More particularly, the chimney line 4c or better the terminal duct 4c3 thereof is designed to convey the volatile fumes or currents from the drying unit 2 to an inlet duct 17 of the circuit 5, from which the fumes or currents can be conveyed according to one or more of the modes described below.

As a first alternative or possibility, the inlet duct 17 flows into a delivery duct 18 which could flow into a discharge duct 19 or in a seventh fan 8g, from which a supply duct 20 of aldehydes or polluting substances mixed with air in the oven 3 and/or in the drying unit 2.

The dispensing duct 17 and the delivery duct 18 could also be directly connected, therefore without interposing the seventh fan 8g, in which case the suction and/or thrust means would be different or placed in different positions of the assembly.

If desired, one or more tapping ducts 18a, 18b, 20a, 20b from the delivery duct 18 to the oven 3 and/or from the supply duct 20 to the oven 3 provided to transfer the fluids or currents conveyed along the delivery duct 18 and/or the supply duct 20 to the oven 3.

The tapping ducts 18a, 18b, 20a, 20b flow into respective portions of the oven 3, for example the tapping ducts 18a, 18b in initial portions of the oven or in any case proximal to the oven inlet 3, if desired in the preheating section 3b, and the tapping ducts 20a, 20b in final portions of the oven or in any case proximal to the outlet of the oven 3, if desired in a final part of the preheating section 3b or in the cooking section 3c.

The supply duct 20 can then terminate in a sorting line 21, which may comprise one or more (four in the drawings) branching ducts 21a, 21b, 21c, 21d each designed to serve one or more portions or sub-units 2a of the drying unit 2.

If desired, suction and/or thrust means are provided, such as an eighth fan 8h in which the supply duct 20 flows and feeds the sorting line 21.

Each portion or sub-unit 2a (eight according to the embodiment illustrated in figures, but could also be two, four, six or more) of the drying unit 2 comprises one or more burners 14, if desired four, and is designed to raise the temperature in a respective treatment chamber or area to a given temperature value, which clearly grows from one sub-unit to another in the transition from the inlet side of the drying unit 2 to the outlet side thereof, if desired from about 100°C to about 400°C. Input side and output side naturally mean the input and output sides of the items printed in the unit or by the drying unit 2.

Thus, for example, if eight sub-units 2a are provided, the first one would be designed to raise the temperature in the respective treatment chamber or area to about 100°C, the second one would be designed to raise the temperature to about 150°C, the third one would be designed to raise the temperature to about 200°C, the fourth one would be designed to raise the temperature to about 280°C, the fifth one would be designed to raise the temperature to about 300°C, the sixth one would be designed to raise the temperature to about 350°C, while the seventh and the eighth ones would be designed to raise the temperature to about 400°C.

As a second alternative o possibility, if desired jointly to the above-described one, the inlet duct 17 flows only or also into a distribution duct or line 23, which extends from the inlet duct 17 to the drying unit 2.

In this regard, the assembly could comprise a plurality of second burners 14 within the drying unit 2, and in this case the distribution line 23 would be designed to send comburent air or fluid within the second burners 14. If more than one branching duct 23a are provided, each of them would be designed to serve one or more second burners 14.

Clearly, alternatively or additionally, the drying unit 2 could be structured differently, for example also or only with drying means different from the burners, such as means for conveying hot air.

As a third alternative or option, if desired jointly to the above-described one(s), the inlet duct 17 flows only or also into a transmission duct 24 directed into the sorting line 21.

As a fourth alternative or option, if desired together with the above-described one(s), the inlet duct 17 flows only or also into an expulsion line or duct 25.

If desired, one or more ducts for deploying ambient or external air 26, 27 are provided within the ventilation or conveying circuit 5, which are in fluid communication with a source of air which is external to the assembly.

In this regard, according to the non-limiting embodiment illustrated in the figures, a duct for dispensing ambient or external air 26 flows or is in fluid communication with the sorting line 21 and/or another one flows or is in communication of fluid with the discharge duct 19.

Moreover, the assembly 1 may also comprise a discharge line 28 of the volatile fumes or components, if desired served by a special ninth fan 8i and, e.g., intercepted by a respective filter. The discharge line 28 could branch directly from the drying unit 2 or from the oven 3, e.g. from an initial section 3a of the same.

With regard to the burners usable in an assembly according to the present invention, they can be of any type, for example:
- the so-called dual-air burners, i.e. defining at least one first duct for supplying primary air supply and at least one second duct for supplying secondary air, which burners may be radiant;
- double air burners, i.e. defining at least a first conduit for supplying primary air and at least one second duct for supplying secondary air directly on the flame, i.e. directly in the primary combustion chamber;
- burners with recirculation means of the gases present within the oven chamber for conveying them in correspondence with the outlet mouth of a terminal nozzle of the respective burner, e.g. burners as described in the international application with publication number WO2015189717.

In the case of double-air burners provided in the drying unit 2, the same could for example be supplied by the sorting line 21, for example for supplying the primary air or current, and by the distribution line 23, for example for supplying the secondary air or current.

Moreover, the drying unit 2 and/or the oven 3 or each section of the same delimits a respective chamber for conveying the printed items to be treated.

In this regard, the assembly 1 may comprise one or more means for conveying the items, e.g. one or more conveyor belts or transport means, if desired of a gripping type.

The assembly 1 may then have a plurality of valves 30, 31, 32 each controlling the flow of currents or fluids along a respective duct of the same assembly, so as to adjust the mixing ratios or the pressure in the assembly.

Moreover, the assembly 1 can also be equipped with sensors, such as temperature and/or pressure and/or quality or composition sensors of the currents conveyed along the ducts. Regarding, in particular, quality or composition sensors, they could be designed to detect the amount of aldehydes or pollutants before the drying unit, in the drying unit, in the chimney or in the ventilation or conveying circuit and consequently set the valves or the suction or thrust means, so as to adjust the assembly in an appropriate manner to abate, if necessary, the aldehydes or the polluting substances present.

The assembly 1 could also be equipped with a CPU control unit of the valves or sensors contained in the assembly, so as to check and, if necessary, adjust the opening/closing of the valves or inform the operators accordingly.

Also an object of the present invention is a digital printing or screen printing system for inks or glazes of items, such as tiles or slabs, comprising a unit for printing on items of inks or glazes with solvents, for example comprising aldehydes and therefore an assembly as indicated above, with the drying unit located downstream of the printing unit and in such a way as to receive the items printed and treated therein, if desired by means of a respective conveyor belt or transport means.

With a system according to the present invention, it is possible to realize a method for abating aldehydes or polluting substances deriving from the solvents of inks or glazes used for digital printing or screen printing of items, which method comprises the following steps:
- digitally printing items such as tiles or slabs by means of the digital printing or screen printing unit;
- inserting or conveying the items in the drying unit (2) so as to determine the evaporation from the items of volatile fumes or currents including aldehydes or polluting substances,
- sucking or conveying the volatile fumes or currents into the chimney or duct 4a, 4b, 4c and from there into the ventilation or conveying circuit 5, so that the volatile fumes or currents are transmitted in the cooking unit or oven 3 and/or in recirculation within the drying unit 2, so as to abate or burn the aldehydes or polluting substances contained in the fumes.

In this regard, the drying unit heats the printed items, bringing their temperature to about 300°C-500°C, thereby being able to determine the evaporation from the volatile fumes or currents including aldehydes or polluting substances deriving from the solvents of inks or glazes used for digital printing or screen printing.

As can be seen, an assembly and a system according to the present invention comprise a pre-oven drier, suitably sized to reach the temperatures and times required for the complete or partial evaporation of the aldehydes and solvents, wherein the fumes of the dryer chimney (which essentially comprise air) are sent to a ventilation or conveying circuit, and from there into the oven and/or the drying unit, so that the burners of the oven or drying unit or the drying means of the latter may act as post-combustors, decomposing or abating the polluting substances.

Modifications and variations of the invention are possible within the scope of protection defined by the claims.

## Claims

1. Assembly for treating items, such as tiles or slabs, printed by digital printing or screen printing of inks or glazes, comprising:
- a drying unit (2) of said printed items;
- a cooking unit or oven (3) for said printed and dried items, said cooking unit or oven (3) being located downstream of said drying unit (2) or being in any case adapted to receive and subsequently treat the items treated in the latter;
said assembly comprising at least one chimney or duct (4a, 4b, 4c) for sucking volatile fumes or currents from said drying unit (2) and a ventilation or conveying circuit (5) of the volatile fumes or currents in fluid communication with said at least one chimney or duct (4a, 4b, 4c) and designed to send the volatile fumes or currents sucked from said drying unit (2) within said cooking unit or oven (3) and/or in recirculation within said drying unit (2), so that the fumes taken from said at least one chimney (4a, 4b, 4c) are conveyed into the cooking unit or oven (3) and/or recirculated in the drying unit (2) for the reduction of the aldehydes or of the polluting substances contained in the fumes;
wherein said ventilation or conveying circuit (5) comprises a first line (5a) designed to send the volatile fumes or currents sucked by the drying unit (2) into the cooking unit or oven (3), so that the fumes taken from said at least one chimney (4a) are conveyed into the cooking unit or oven (3),
and **characterized by** the fact that said first line (5a) of the ventilation or conveying circuit (5) comprises a sampling unit (10) of a volatile current from an end portion of the oven or downstream of the oven (3), so as to mix the volatile fumes or currents sucked from said drying unit (2) with said volatile current from an end portion of the oven or downstream of the oven (3) before being placed in the oven (3).

2. Assembly according to claim 1, wherein said first line (5a) comprises a transfer duct (11), which extends from said at least one chimney (4a) to the sampling unit (10) and wherein the transfer duct (11) is in fluid communication with a dispensing duct (12) arranged to send aldehydes or polluting substances possibly mixed with air within said oven (2) or within the first burners thereof.

3. Assembly according to one or more of the preceding claims, wherein said ventilation or conveying circuit (5) comprises a second line (5b) designed to send the volatile fumes or currents sucked by the drying unit (2) in recirculation within the drying unit (2) itself and wherein said second line (5b) comprises a distribution duct or line (13), which extends from said chimney (4b) to the drying unit (2).

4. Assembly according to claim 3, wherein said distribution line (13) comprises one or more branching ducts (13a, 13b, 13c) each one designed to serve a respective portion or sub-unit (2a) of the drying unit (2).

5. Assembly according to any one of the preceding claims, comprising a plurality of drying burners (14) within said drying unit (2).

6. Assembly according to claim 4 and 5, wherein said distribution line (13) is designed to send comburent air or fluid inside said drying burners (14).

7. Assembly according to any one of the preceding claims, wherein said drying unit (2) comprises a plurality of portions or sub-units (2a), if desired each one comprising one or more drying burners (14), and wherein each portion or sub-unit (2a) is designed to raise the temperature in a respective treatment chamber or area to a determined temperature value, which rises from one sub-unit (2a) to another in the passage from the inlet side of the drying unit (2) to the exit side of the same.

8. Assembly according to any one of the preceding claims, wherein said drying unit (2a) has a length equal to 10-40% or 20-10/30% of the overall length of said assembly.

9. Assembly according to any one of the preceding claims, wherein said at least one chimney (4c) is designed to convey the volatile fumes or currents from the drying unit (2) to an inlet duct (17) of said ventilation or conveying circuit (5), and wherein the inlet duct (17) opens in a delivery duct (18) in fluid communication with a supply duct (20) in the oven (3) and/or in the drying unit (2) of volatile fumes or currents comprising aldehydes or polluting substances.

10. Assembly according to claim 9, comprising one or more tapping ducts (18a, 18b, 20a, 20b) from the delivery duct (18) to the oven (3) and/or from the supply duct (20) to the oven (3) provided to transfer the fluids or currents conveyed along the delivery duct (18) and/or the supply duct (20) to the oven (3).

11. Assembly according to claim 9 or 10, wherein said inlet duct (17) opens into a distribution duct or line (23), which extends from the inlet duct (17) to the drying unit (2).

12. Assembly according to any one of the preceding claims, wherein said drying unit is arranged to bring the temperature of said printed items to about 300 ° C to 500 ° C, for example 400 ° C.

13. System for digital printing items, such as tiles or slabs, with inks or glazes, comprising:
- a digital printing or screen printing unit for printing items;
- an assembly according to any of the claims from 1 to 12, wherein said drying unit (2) is placed downstream of said printing unit and in such a way as to receive and then process the printed items therein.

14. Method for reducing aldehydes or polluting substances deriving from the solvents of inks or glazes used for digital printing or screen printing of items by means of a system according to claim 13, comprising the following steps:
- digitally printing items such as tiles or slabs by means of said digital printing or screen printing unit;
- inserting or conveying said objects into said drying unit (2) so as to determine the evaporation from said objects of volatile fumes or currents including aldehydes or polluting substances,
- sucking or conveying said volatile fumes or currents into said at least one chimney or duct (4a, 4b, 4c) and from the latter into said ventilation or conveying circuit (5), so that said volatile fumes or currents are transmitted in said cooking unit or oven (3) and/or recirculating within said drying unit (2), so as to reduce or burn the aldehydes or polluting substances contained in the volatile fumes or currents.

15. Method according to claim 14, wherein said drying unit heats said printed items, bringing their temperature to about 300 ° C-500 ° C, thereby evaporating volatile fumes or currents including aldehydes or polluting substances deriving from the solvents of inks or glazes used for digital printing or screen printing.

## Patentansprüche

1. Anordnung zum Behandeln von Gegenständen, wie Fliesen oder Platten, die durch Digitaldruck oder Siebdruck mit Tinten oder Glasuren bedruckt sind, umfassend:
- eine Trocknungseinheit (2) für die bedruckten Gegenstände;
- eine Brenneinheit oder einen Ofen (3) für die bedruckten und getrockneten Gegenstände, wobei die Brenneinheit oder der Ofen (3) stromabwärts von der Trocknungseinheit (2) angeordnet oder in jedem Fall ausgebildet ist, um die in dieser behandelten Gegenstände aufzunehmen und anschließend zu behandeln;
wobei die Anordnung mindestens einen Kamin oder Kanal (4a, 4b, 4c) zum Absaugen flüchtiger Dämpfe oder Strömungen aus der Trocknungseinheit (2) und einen Belüftungs- oder Förderkreislauf (5) für die flüchtigen Dämpfe oder Strömungen, der in Fluidverbindung mit dem mindestens einen Kamin oder Kanal (4a, 4b, 4c) steht und ausgebildet ist, die aus der Trocknungseinheit (2) abgesaugten flüchtigen Dämpfe oder Strömungen in die Brenneinheit oder den Ofen (3) und/oder in Zirkulation innerhalb der Trocknungseinheit (2) zu leiten, so dass die aus dem mindestens einen Kamin (4a, 4b, 4c) entnommenen Dämpfe in die Brenneinheit oder den Ofen (3) geleitet und/oder in der Trocknungseinheit (2) zirkuliert werden, um die in den Dämpfen enthaltenen Aldehyde oder Schadstoffe zu reduzieren;
wobei der Belüftungs- oder Förderkreislauf (5) eine erste Leitung (5a) umfasst, die ausgebildet ist, die aus der Trocknungseinheit (2) angesaugten flüchtigen Dämpfe oder Strömungen in die Brenneinheit oder den Ofen (3) zu leiten, so dass die aus dem mindestens einen Kamin (4a) entnommenen Dämpfe in die Brenneinheit oder den Ofen (3) geleitet werden,
und **dadurch gekennzeichnet, dass** die erste Leitung (5a) des Belüftungs- oder Förderkreislaufs (5) eine Probenahmeeinheit (10) zum Entnehmen einer flüchtigen Strömung aus einem Endbereich des Ofens oder von stromabwärts des Ofens (3) umfasst, um die aus der Trocknungseinheit (2) angesaugten flüchtigen Dämpfe oder Strömungen mit der flüchtigen Strömung aus einem Endbereich des Ofens oder stromabwärts des Ofens (3) zu vermischen, bevor sie in den Ofen (3) geleitet werden.

2. Anordnung nach Anspruch 1, wobei die erste Leitung (5a) einen Übertragungskanal (11) umfasst, der sich von dem mindestens einen Kamin (4a) zu der Probenahmeeinheit (10) erstreckt, und wobei der Übertragungskanal (11) in Fluidverbindung mit einem Auslasskanal (12) steht, der angeordnet ist, Aldehyde oder Schadstoffe, die möglicherweise mit Luft innerhalb des Ofens (2) oder innerhalb dessen ersten Brennern vermischt sind, abzugeben.

3. Anordnung nach einem oder mehreren der vorstehenden Ansprüche, wobei der Belüftungs- oder Förderkreislauf (5) eine zweite Leitung (5b) umfasst, die ausgebildet ist, die von der Trocknungseinheit (2) angesaugten flüchtigen Dämpfe oder Strömung in eine Zirkulation innerhalb der Trocknungseinheit (2) selbst zu leiten, und wobei die zweite Leitung (5b) einen Verteilerkanal oder eine Verteilerleitung (13) umfasst, die sich von dem Kamin (4b) zu der Trocknungseinheit (2) erstreckt.

4. Anordnung gemäß Anspruch 3, wobei die Verteilerleitung (13) einen oder mehrere Abzweigkanäle (13a, 13b, 13c) umfasst, wobei jeder ausgebildet sind, einen entsprechenden Bereich oder eine Untereinheit (2a) der Trocknungseinheit (2) zu bedienen.

5. Anordnung nach einem der vorhergehenden Ansprüche, wobei sie eine Vielzahl von Trocknungsbrennern (14) innerhalb der Trocknungseinheit (2) umfasst.

6. Anordnung nach Anspruch 4 und 5, wobei die Verteilerleitung (13) ausgebildet ist, Verbrennungsluft oder -fluid in die Trocknungsbrenner (14) zu leiten.

7. Anordnung nach einem der vorhergehenden Ansprüche, wobei die Trocknungseinheit (2) eine Vielzahl von Bereichen oder Untereinheiten (2a) umfasst, die - falls gewünscht - jeweils einen oder mehrere Trocknungsbrenner (14) umfassen, und wobei jeder Bereich oder jede Untereinheit (2a) ausgebildet ist, die Temperatur in einer jeweiligen Behandlungskammer oder einem jeweiligen Behandlungsbereich auf einen bestimmten Temperaturwert anzuheben, der von einer Untereinheit (2a) zu der nächsten beim Durchgang von der Einlassseite der Trocknungseinheit (2) zur Auslassseite derselben ansteigt.

8. Anordnung nach einem der vorhergehenden Ansprüche, wobei die Trocknungseinheit (2a) eine Länge aufweist, die 10-40 % oder 20-10/30 % der Gesamtlänge der Anordnung entspricht.

9. Anordnung nach einem der vorhergehenden Ansprüche, wobei der mindestens eine Kamin (4c) ausgebildet ist, die flüchtigen Dämpfe oder Strömungen aus der Trocknungseinheit (2) zu einem Einlasskanal (17) des Belüftungs- oder Förderkreislaufs (5) zu leiten, und wobei der Einlasskanal (17) in einen Auslasskanal (18) mündet, der in Fluidverbindung mit einem Zufuhrkanal (20) in dem Ofen (3) und/oder in der Trocknungseinheit (2) für flüchtige Dämpfe oder Strömungen steht, die Aldehyde oder Schadstoffe enthalten.

10. Anordnung nach Anspruch 9, wobei sie einen oder mehrere Abzweigkanäle (18a, 18b, 20a, 20b) von dem Auslasskanal (18) zu dem Ofen (3) und/oder von dem Zufuhrkanal (20) zu dem Ofen (3) aufweist, die vorgesehen sind, um die entlang des Auslasskanals (18) und/oder des Zufuhrkanals (20) geförderten Fluide oder Strömungen zu dem Ofen (3) zu leiten.

11. Anordnung nach Anspruch 9 oder 10, wobei der Einlasskanal (17) in einen Verteilerkanal oder eine Verteilerleitung (23) mündet, die sich von dem Einlasskanal (17) zu der Trocknungseinheit (2) erstreckt.

12. Anordnung nach einem der vorhergehenden Ansprüche, wobei die Trocknungseinheit vorgesehen ist, die Temperatur der bedruckten Gegenstände auf etwa 300 °C bis 500 °C, beispielsweise 400 °C, zu bringen.

13. System zum Digitaldrucken von Gegenständen, wie Fliesen oder Platten, mit Tinten oder Glasuren, umfassend:
- eine Digitaldruck- oder Siebdruckeinheit zum Bedrucken von Gegenständen,
- eine Anordnung gemäß einem der Ansprüche 1 bis 12, wobei die Trocknungseinheit (2) stromabwärts von der Druckeinheit und derart angeordnet ist, dass sie die bedruckten Gegenstände aufnimmt und anschließend bearbeitet.

14. Verfahren zur Reduzierung von Aldehyden oder Schadstoffen, die aus den Lösungsmitteln von Tinten oder Glasuren stammen, die für den Digitaldruck oder Siebdruck von Gegenständen verwendet werden, mittels eines Systems nach Anspruch 13, mit den folgenden Schritten:
- Bedrucken mittels Digitaldruck von Gegenständen wie Fliesen oder Platten mittels der Digitaldruck- oder Siebdruckeinheit;
- Einführen oder Zuführen der Gegenstände in die Trocknungseinheit (2), um die Verdampfung flüchtiger Dämpfe oder Strömungen, die Aldehyde oder Schadstoffe enthalten, aus den Gegenständen zu bewirken,
- Absaugen oder Fördern der flüchtigen Dämpfe oder Strömungen in den mindestens einen Kamin oder Kanal (4a, 4b, 4c) und von dort in den Belüftungs- oder Förderkreislauf (5), so dass die flüchtigen Dämpfe oder Strömungen in die Brennvorrichtung oder den Ofen (3) geleitet werden und/oder innerhalb der Trocknungseinheit (2) zirkuliert werden, um die in den flüchtigen Dämpfen oder Strömungen enthaltenen Aldehyde oder Schadstoffe zu reduzieren oder zu verbrennen.

15. Verfahren nach Anspruch 14, wobei die Trocknungseinheit die bedruckten Gegenstände auf eine Temperatur von etwa 300 °C bis 500 °C erhitzt, wodurch flüchtige Dämpfe oder Strömungen, die Aldehyde oder Schadstoffe aus den Lösungsmitteln der für den Digitaldruck oder Siebdruck verwendeten Tinten oder Glasuren enthalten, verdampft werden.

## Revendications

1. - Ensemble pour le traitement d'articles, tels que des carreaux ou des dalles, imprimés par impression numérique ou sérigraphie d'encres ou de glaçures, comprenant :
- une unité de séchage (2) desdits articles imprimés ;
- une unité de cuisson ou un four (3) pour lesdits articles imprimés et séchés, ladite unité de cuisson ou ledit four (3) étant situé(e) en aval de ladite unité de séchage (2) ou étant dans tous les cas apte à recevoir et traiter ultérieurement les articles traités dans celle-ci/celui-ci ;
ledit ensemble comprenant au moins une cheminée ou un conduit (4a, 4b, 4c) pour aspirer des fumées volatiles ou courants volatils provenant de ladite unité de séchage (2) et un circuit de ventilation ou de transport (5) des fumées volatiles ou courants volatils en communication fluidique avec ladite au moins une cheminée ou ledit au moins un conduit (4a, 4b, 4c) et conçu pour envoyer les fumées volatiles ou courants volatils aspiré(e)s en provenance de ladite unité de séchage (2) dans ladite unité de cuisson ou ledit four (3) et/ou en recyclage dans ladite unité de séchage (2), de telle sorte que les fumées prélevées dans ladite au moins une cheminée (4a, 4b, 4c) sont acheminées dans l'unité de cuisson ou le four (3) et/ou recyclées dans l'unité de séchage (2) pour la réduction des aldéhydes ou des substances polluantes contenues dans les fumées ;
dans lequel ledit circuit de ventilation ou de transport (5) comprend une première ligne (5a) conçue pour envoyer les fumées volatiles ou courants volatils aspiré(e)s par l'unité de séchage (2) dans l'unité de cuisson ou le four (3), de telle sorte que les fumées prélevées dans ladite au moins une cheminée (4a) sont acheminées dans l'unité de cuisson ou le four (3),
et **caractérisé par le fait que** ladite première ligne (5a) du circuit de ventilation ou de transport (5) comprend une unité d'échantillonnage (10) d'un courant volatil provenant d'une partie d'extrémité du four ou en aval du four (3), de manière à mélanger les fumées volatiles ou courants volatils aspiré(e)s à partir de ladite unité de séchage (2) avec ledit courant volatil provenant d'une partie d'extrémité du four ou en aval du four (3) avant d'être placés dans le four (3).

2. - Ensemble selon la revendication 1, dans lequel ladite première ligne (5a) comprend un conduit de transfert (11), qui s'étend de ladite au moins une cheminée (4a) à l'unité d'échantillonnage (10) et dans lequel le conduit de transfert (11) est en communication fluidique avec un conduit de distribution (12) agencé pour envoyer des aldéhydes ou des substances polluantes le cas échéant mélangées à l'air à l'intérieur dudit four (2) ou à l'intérieur des premiers brûleurs de celui-ci.

3. - Ensemble selon une ou plusieurs des revendications précédentes, dans lequel ledit circuit de ventilation ou de transport (5) comprend une seconde ligne (5b) conçue pour envoyer les fumées volatiles ou courants volatils aspiré(e)s par l'unité de séchage (2) en recyclage à l'intérieur de l'unité de séchage (2) elle-même et dans lequel ladite seconde ligne (5b) comprend un conduit ou une ligne de distribution (13), qui s'étend de ladite cheminée (4b) à l'unité de séchage (2).

4. - Ensemble selon la revendication 3, dans lequel ladite ligne de distribution (13) comprend un ou plusieurs conduits de dérivation (13a, 13b, 13c), chacun étant conçu pour desservir une partie ou sous-unité respective (2a) de l'unité de séchage (2).

5. - Ensemble selon l'une quelconque des revendications précédentes, comprenant une pluralité de brûleurs de séchage (14) à l'intérieur de ladite unité de séchage (2).

6. - Ensemble selon l'une des revendications 4 et 5, dans lequel ladite ligne de distribution (13) est conçue pour envoyer de l'air comburant ou du fluide comburant à l'intérieur desdits brûleurs de séchage (14).

7. - Ensemble selon l'une quelconque des revendications précédentes, dans lequel ladite unité de séchage (2) comprend une pluralité de parties ou sous-unités (2a), si souhaité chacune comprenant un ou plusieurs brûleurs de séchage (14), et dans lequel chaque partie ou sous-unité (2a) est conçue pour élever la température dans une chambre ou zone de traitement respective à une valeur de température déterminée, qui augmente d'une sous-unité (2a) à une autre dans le passage depuis le côté d'entrée de l'unité de séchage (2) vers le côté de sortie de celle-ci.

8. - Ensemble selon l'une quelconque des revendications précédentes, dans lequel ladite unité de séchage (2a) a une longueur égale à 10-40% ou 20-10/30% de la longueur totale dudit ensemble.

9. - Ensemble selon l'une quelconque des revendications précédentes, dans lequel ladite au moins une cheminée (4c) est destinée à transporter les fumées volatiles ou courants volatils de l'unité de séchage (2) à un conduit d'entrée (17) dudit circuit de ventilation ou de transport (5), et dans lequel le conduit d'entrée (17) s'ouvre dans un conduit de distribution (18) en communication fluidique avec un conduit d'alimentation (20) dans le four (3) et/ou dans l'unité de séchage (2) de fumées volatiles ou courants volatils comprenant des aldéhydes ou des substances polluantes.

10. - Ensemble selon la revendication 9, comprenant un ou plusieurs conduits de piquage (18a, 18b, 20a, 20b) du conduit de distribution (18) au four (3) et/ou du conduit d'alimentation (20) au four (3) prévus pour transférer les fluides ou courants transportés le long du conduit de distribution (18) et/ou du conduit d'alimentation (20) vers le four (3).

11. - Ensemble selon la revendication 9 ou 10, dans lequel ledit conduit d'entrée (17) s'ouvre dans un conduit ou une ligne de distribution (23), qui s'étend du conduit d'entrée (17) à l'unité de séchage (2).

12. - Ensemble selon l'une quelconque des revendications précédentes, dans lequel ladite unité de séchage est agencée pour porter la température desdits articles imprimés à environ 300°C à 500°C, par exemple 400°C.

13. - Système d'impression numérique d'articles, tels que des carreaux ou des dalles, avec des encres ou des glaçures, comprenant :
- une unité d'impression numérique ou de sérigraphie pour l'impression d'articles ;
- un ensemble selon l'une quelconque des revendications 1 à 12, dans lequel ladite unité de séchage (2) est placée en aval de ladite unité d'impression et de manière à recevoir puis à traiter les articles imprimés dans celle-ci.

14. - Procédé de réduction d'aldéhydes ou de substances polluantes provenant des solvants d'encres ou de glaçures utilisées pour l'impression numérique ou la sérigraphie d'articles au moyen d'un système selon la revendication 13, comprenant les étapes suivantes :
- imprimer numériquement des articles tels que des carreaux ou des dalles au moyen de ladite unité d'impression numérique ou de sérigraphie ;
- introduire ou transporter lesdits articles dans ladite unité de séchage (2) afin de déterminer l'évaporation à partir desdits articles de fumées volatiles ou courants volatils comprenant des aldéhydes ou des substances polluantes,
- aspirer ou transporter lesdites fumées volatiles ou courants volatils dans ladite au moins une cheminée ou ledit au moins un conduit (4a, 4b, 4c) et depuis celle-ci ou celui-ci dans ledit circuit de ventilation ou de transport (5), de telle sorte que lesdites fumées volatiles ou lesdits courants volatils sont transmis(es) dans ladite unité de cuisson ou ledit four (3) et/ou en recyclage dans ladite unité de séchage (2), de façon à réduire ou brûler les aldéhydes ou substances polluantes contenues dans les fumées volatiles ou courants volatils.

15. - Procédé selon la revendication 14, dans lequel ladite unité de séchage chauffe lesdits articles imprimés, portant leur température à environ 300°C-500°C, faisant ainsi évaporer les fumées volatiles ou courants volatils comprenant des aldéhydes ou des substances polluantes provenant des solvants d'encres ou de glaçures utilisées pour l'impression numérique ou la sérigraphie.
